# EUROPÄISCHE PATENTSCHRIFT

(11) **EP 1 444 067 B1**
(45) Veröffentlichungstag und Bekanntmachung des Hinweises auf die Patenterteilung: **14.03.2007**
(21) Anmeldenummer: 02777336.5
(22) Anmeldetag: 31.10.2002
(51) Int. Cl.: B23D 61/02

(54) **SÄGEBLATT**
SAW BLADE
LAME DE SCIE

(30) Priorität: 03.11.2001 DE 20117934 U
(43) Veröffentlichungstag der Anmeldung: 11.08.2004
(73) Patentinhaber: WIDMAYER, Rolf, D-73430 Aalen (DE)
(72) Erfinder: WIDMAYER, Rolf, D-73430 Aalen (DE)
(74) Vertreter: Dörner, Lothar
(86) Internationale Anmeldenummer: PCT/EP2002/012131
(87) Internationale Veröffentlichungsnummer: WO 2003/039796

(56) Entgegenhaltungen:
- DE-A- 19 818 854
- DE-U- 20 009 686
- DE-U- 29 909 230

## Beschreibung

Die Erfindung betrifft ein Sägeblatt mit einem Grundkörper, auf dem ungeschränkte Zähne mit Schneiden angeordnet sind, die in sich wiederholenden Gruppen zu mindestens vier Zähnen zusammengefasst und symmetrisch zur Längsmittelebene des Grundkörpers ausgebildet sind, wobei die Zähne einer Gruppe unterschiedliche Breiten und/oder Höhen aufweisen und die Breiten- und/oder Höhenänderung innerhalb einer Gruppe von Zähnen nicht linear erfolgt.

Beim Sägen fester, insbesondere metallischer Werkstoffe treten an den Sägezähnen hohe Reibungs- und Stoßbelastungen auf. Aufgrund dieser hohen Belastungen sind die Sägezähne aus extrem hartem Material gefertigt. Um die Belastungen an den Sägezähnen zu verringern, ist es in der Kreissägen- und Bandsägenindustrie üblich, ungeschränkte Zähne in Verbindung mit verschiedenen Zahnspitzenformen als Vor- und Nachschneidergeometrie zu verwenden. Dieses Prinzip beinhaltet aufeinander folgende Zahngruppen von jeweils zwei Zähnen, von denen der jeweils erste Zahn - Vorschneider genannt - seitlich stark angephast und etwas länger als der folgende, nur minimal angephaste zweite Zahn - Nachschneider genannt - ist. Der abgehobene Span wird bei dieser Geometrie auf zwei Zähne verteilt, um den Verschleiß zu mindern.

Ein Sägeblatt der eingangs genannten Art ist aus der DE 198 18 854 A bekannt. Das bekannte Sägeblatt betrifft ein Kreissägeblatt, insbesondere zur Tierkörperzerlegung. Auf dem Umfang des Kreissägeblattes sind lückenlos Sägezähne angeordnet, wobei Schneidflanken von Schneidzähnen unterschiedlicher Zahnbreite aufeinander folgen. Alle Sägezähne weisen jeweils die gleiche Zahnbreite auf. Zwischen einzelnen oder Gruppen der Schneidezähne liegen unterschiedliche Anzahlen von radial kürzeren Räumzähnen mit kürzeren radialen Schneidflanken. Einzelne Gruppen von Zähnen sind beispielsweise je auf ein Viertel des Umfangs des Kreissägeblattes wiederholt.

Auch folgende Sägeblätter gehören zum Stand der Technik: Bei dem aus DE 42 00 423 C2 bekannten Sägeblatt sind die Zähne in sich wiederholenden Zyklen vorgesehen. Jeder Zyklus weist eine aus mindestens drei Zähnen bestehende Zahngruppe mit von Zahn zu Zahn abnehmender Höhe und dabei zunehmender Breite auf. Bei dem aus WO 98/45076 bekannten Sägeblatt weisen die Zähne einer Gruppe eine von Zahn zu Zahn zunehmende Höhe und abnehmende Breite auf. Bei dem aus 43 00 622 C2 bekannten Sägeblatt sind mindestens zwei Gruppen von Zähnen ineinander geschachtelt angeordnet. Aus der WO 01/12371 ist darüber hinaus ein Sägeblatt bekannt, bei dem die Zähne in sich wiederholenden Gruppen zu mindestens zwei Gruppen von Zähnen angeordnet sind.

Allen vorstehend genannten Sägeblättern ist gemeinsam, dass sie mindestens eine Gruppe von Zähnen beziehungsweise mindestens einen Zyklus von Zähnen mit einer linearen geometrischen Änderung in der Höhe und/oder Breite der Zähne aufweisen. Aufgrund der linearen Geometrie treten an den Sägeblättern relativ starke Vibrationen auf, die auf Dauer werkzeugschädigend wirken.

Der Erfindung liegt die Aufgabe zugrunde, ein Sägeblatt der eingangs genannten Art zu schaffen, das beim Sägevorgang weniger Vibrationen hervorruft und darüber hinaus eine geringe Stoßempfindlichkeit aufweist. Gemäß der Erfindung wird diese Aufgabe bei einem Sägeblatt der eingangs genannten Art dadurch gelöst, dass der erste Zahn einer Gruppe die geringste Höhe und gleichzeitig die größte Breite der Gruppe aufweist.

Mit der Erfindung ist ein Sägeblatt geschaffen, welches beim Sägevorgang weniger Vibrationen hervorruft. Die Ursache hierfür ist in der unregelmäßigen Aufteilung der Arbeit der Zähnen einer Gruppe begründet. Durch die wechselnden Orte der Spanabhebung - beispielsweise sägt zunächst ein Zahn außen, dann sägt ein folgender Zahn geringerer Breite innen - ist ein Einschwingen des Sägeblattes, wie dies bei linearen Geometrien zu beobachten ist, verhindert. Vielmehr ist eine unregelmäßige Frequenz beim Sägen hervorgerufen. Das Zusammenfallen von Schwingungsspitzen und damit deren Addition ist dadurch vermieden. Es handelt sich also um eine Art "destruktive Interferenz", also der gewollten Überlagerung von Wellentälern mit Wellenbergen, wie sie beispielsweise zur Bekämpfung von Geräuschen im Fahrzeug- und Flugzeugbau angewandt wird.

Durch die geringeren Vibrationen unterliegt das erfindungsgemäße Sägeblatt einem geringeren Verschleiß und weist außerdem eine geringere Stoßempfindlichkeit auf. Die Lebensdauer ist bei gleichzeitiger Verbesserung des Schneidergebnisses erhöht. Zudem ist ein stabiler Gradlauf im Schnittkanal sowie eine gute Oberflächengüte erzeugt.

Vorteilhaft sind die Abstände zwischen den aufeinanderfolgenden Zähnen variabel. Durch das zeitlich inkonstante Auftreffen der Zähne in den Schnittkanal aufgrund des unterschiedlichen Abstandes der Zähne zueinander sind die Vibrationen zusätzlich reduziert.

Mindestens zwei Gruppen von Zähnen können ineinandergeschachtelt angeordnet sein. Hierdurch werden die Vibrationen weiter reduziert.

Die Erfindung wird anhand einiger Ausführungsbeispiele beschrieben. Es zeigen:

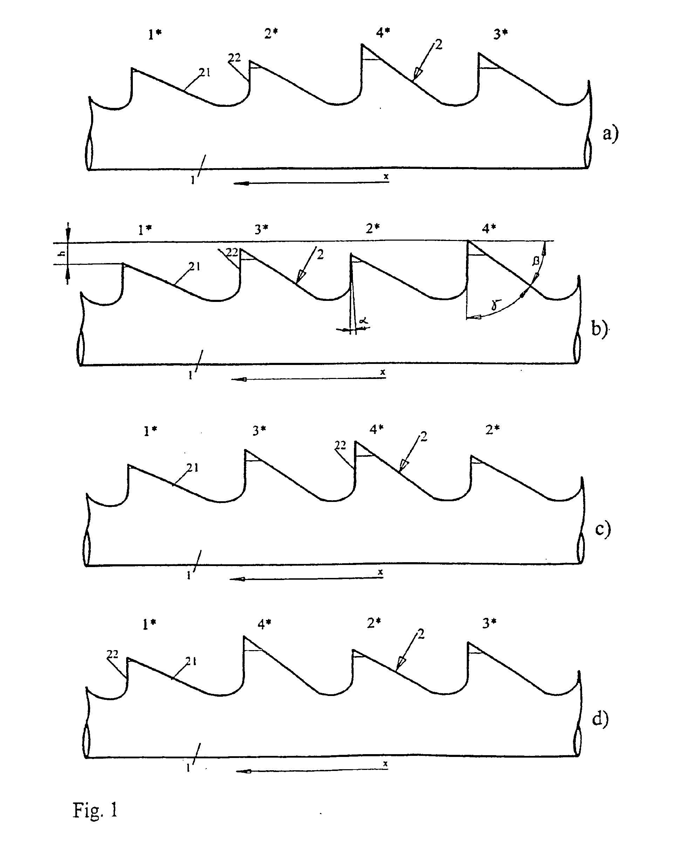

- Fig. 1 a):: eine Seitenansicht eines Ausschnittes eines Sägeblatts mit vier Zähnen;
- Fig. 1 b):: eine Seitenansicht eines Ausschnittes eines Sägeblatts mit vier Zähnen in einer anderen Ausgestaltung;
- Fig. 1 c):: eine Seitenansicht eines Ausschnittes eines Sägeblatts mit vier Zähnen in einer weiteren Ausgestaltung;
- Fig. 1 d):: eine Seitenansicht eines Ausschnittes eines Sägeblatts mit vier Zähnen in einer nochmals anderen Ausgestaltung;
- Fig. 2 a) :: eine schematische Darstellung des Zahnhöhen- und Zahnbreiten-Verlaufs des in Fig. 1 a) dargestellten Sägeblattes;

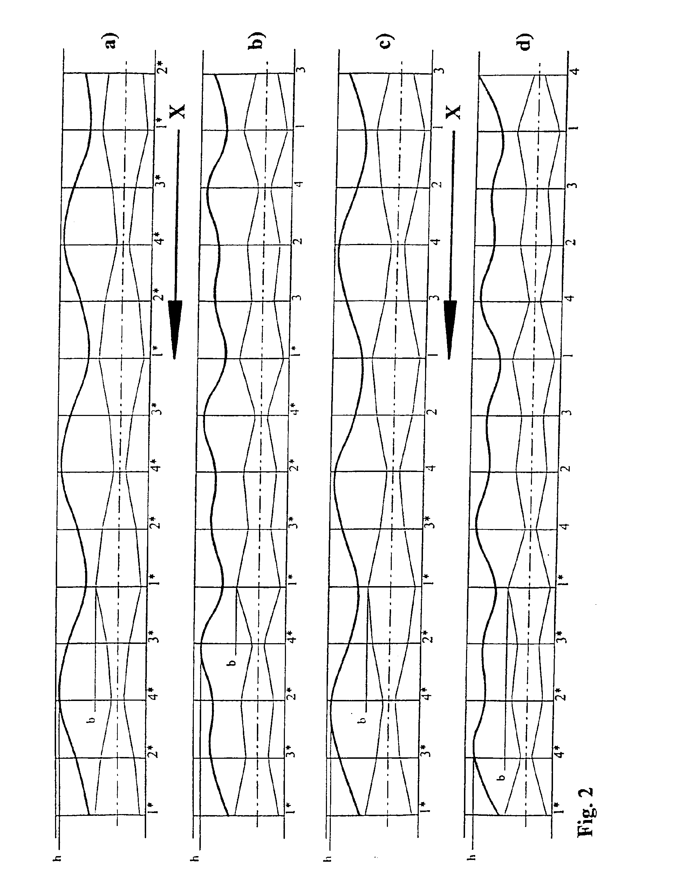

- Fig. 2 b):: eine schematische Darstellung des Zahnhöhen- und Zahnbreiten-Verlaufs des in Fig. 1 b) dargestellten Sägeblattes;
- Fig. 2 c):: eine schematische Darstellung des Zahnhöhen- und Zahnbreiten-Verlaufs des in Fig. 1 c) dargestellten Sägeblattes und
- Fig. 2 d) :: eine schematische Darstellung des Zahnhöhen- und Zahnbreiten-Verlaufs des in Fig. 1 d) dargestellten Sägeblattes.

Die als Ausführungsbeispiel gewählten Sägeblätter weisen einen Grundkörper 1 auf. Auf dem Grundkörper 1 sind ungeschränkte Zähne 2 angeordnet. Die Zähne 2 sind zu Gruppen aus mindestens vier Zähnen zusammengefaßt.

Jeder Zahn 2 weist an seinem dem Grundkörper 1 abgewandten Ende einen Zahnrücken 21 auf. Auf der in Schneidrichtung X zugewandten Seite weist jeder Zahn 2 eine Zahnbrust 22 auf. Die Zahnbrust 22 ist unter einem Spanwinkel α zur Vertikalen angeordnet. Der Spanwinkel kann innerhalb einer Zahngruppe variieren. Er ist in einem Bereich vorgesehen, der von der Vertikalen entgegen dem Uhrzeigersinn wandert. Der Zahnrücken 21 eines jeden Zahns 2 ist unter einem Freiwinkel β zur Horizontalen des Sägeblatts angeordnet. Der Freiwinkel β ist immer größer als 0°. Der Zahnrücken 21 und die Zahnbrust 22 eines jeden Zahns 2 sind unter einem Keilwinkel γ zueinander angeordnet, der in jedem Fall kleiner 90° ist.

Die Zähne 2 weisen einen - nicht dargestellten - Phasenwinkel δ auf. Der Phasenwinkel δ kann in einem Bereich zwischen 5° und 60° gewählt werden. Auch kann der Phasenwinkel δ innerhalb einer Zahngruppe von Zahn zu Zahn variieren.

Bei den in den Figuren dargestellten Sägeblättern handelt es sich um solche mit Zahngruppen zu jeweils vier Zähnen 1*, 2*, 3* und 4*. Die Zähne einer Gruppe weisen jeweils eine unterschiedliche Höhe und eine unterschiedliche Breite auf, wobei der niedrigste Zahn 1* zugleich der Zahn mit der größten Breite ist. Der Zahn 4* ist in der Gruppe der höchste Zahn und zugleich der Zahn mit der geringsten Breite. Die Differenz der Höhe zwischen dem niedrigsten Zahn 1* und dem höchsten Zahn 4* ist mit h gekennzeichnet (Figuren 1 b) und 2 a) bis d)). Die Differenz der Breite zwischen dem schmalsten Zahn 4* und dem breitesten Zahn 1* ist mit b gekennzeichnet (Figur 2 a) bis d)).

Die Breiten- und/oder Höhenänderung innerhalb einer Gruppe von Zähnen erfolgt nicht linear. Das bedeutet, dass innerhalb einer Zahngruppe auf einen Zahn geringer Höhe ein Zahn oder mehrere Zähne größerer Höhe folgen, dem oder denen wiederum ein Zahn oder mehrere Zähne geringerer Höhe nachfolgen, der oder die jedoch nicht die gleiche Höhe wie der erste Zahn aufweist, und so fort.

Die als Ausführungsbeispiele dargestellten Zahngruppen beginnen jeweils mit dem kleinsten Zahn 1*, der gleichzeitig der breiteste Zahn der Gruppe ist. Auf diesen folgt (vgl. Figur 1 a)) der Zahn 2*, welcher der zweitkleinste ist und gleichzeitig derjenige Zahn mit der zweitgrößten Breite ist. Dem Zahn 2* folgt der höchste Zahn 4* der Gruppe nach, welcher auch der schmalste der Gruppe ist, und dem dann der zweithöchste Zahn 3* der Gruppe nachfolgt, der gleichzeitig der zweitschmalste Zahn der Gruppe ist. In diesem Ausführungsbeispiel ist die Linearität dadurch durchbrochen, dass zwar ausgehend vom Zahn 1* bis zum Zahn 4* ein solcher linearer Höhen- und Breitenverlauf vorhanden ist, der Zahn 3* jedoch erst auf den Zahn 4* folgt und erst damit die Zahngruppe vollständig ist. Da der Zahn 3* eine geringere Höhe und eine größere Breite als der Zahn 4* aufweist, ist damit die Linearität sowohl im Höhen- als auch im BreitenVerlauf der Zähne innerhalb der Gruppe unterbrochen.

Im Ausführungsbeispiel nach Figur 1 b) beginnt die Zahngruppe ebenfalls mit dem Zahn 1*. Diesem folgt der Zahn 3*, welcher der zweithöchste und zweitschmalste Zahn der Gruppe ist. Auf den Zahn 3* folgt der zweitkleinste und zweitbreiteste Zahn 2*, dem als letztem Zahn der Gruppe der höchste und schmalste Zahn 4* nachfolgt. Bei dieser Reihenfolge der Zähne, bei der abwechselnd ein höherer, schmalerer einem kürzeren, breiteren Zahn folgt, ergibt sich bei Verbindung der Zahnspitzen, wie dies in Figur 2 b) dargestellt ist, ein wellenförmiger Verlauf mit vielen Spitzen beziehungsweise Tiefen. Gleiches gilt für das Ausführungsbeispiel nach Figur 1 d), das eine Anordnung der Zähne in der Reihenfolge 1*, 4*, 2*, 3* aufweist. Auch hier ergibt sich ein wellenförmiger Höhen-Verlauf mit vielen Spitzen beziehungsweise Tiefen (Figur 2 d)).

Die Verbindung der Zahnspitzen beim Ausführungsbeispiel nach Figur 1 a), wie sie in Figur 2 a) dargestellt ist, ergibt dagegen einen wellenförmigen Verlauf, der nur halb so viele Spitzen und Täler aufweist. Gleiches gilt für das Ausführungsbeispiel gemäß Figur 1 c), das eine Anordnung der Zähne in der Reihenfolge 1*, 3*, 4*, 2* aufweist. Die Verbindung der Zahnspitzen ergibt das in Figur 2 c) dargestellte Bild. Vergleicht man die Darstellungen in den Figuren 2 a) und c) auf der einen mit denjenigen in den Figuren 2 b) _und d) auf der anderen Seite, so erkennt man einen insgesamt harmonischeren Verlauf in den Darstellungen der Figuren 2 a) und c). Diese theoretische Betrachtung wird auch durch die Ergebnisse beim Sägen mit diesen Ausführungsbeispielen bestätigt. Die gegenüber den aus dem Stand der Technik mit den Sägeblättern nach den Ausführungsbeispielen gemäß der Figuren 2 b) und d) erzielten verbesserten Ergebnisse werden mit den Ausführungsbeispielen nach den Figuren 2 a) und c) noch einmal - insbesondere hinsichtlich der auftretenden Vibrationen - deutlich übertroffen.

Die Zahngruppen wiederholen sich zyklisch auf dem Sägeband. Dabei ist es möglich, daß jeweils identische Gruppen von Zähnen aufeinander folgen. Es besteht darüber hinaus die Möglichkeit, daß die aufeinanderfolgenden Zahngruppen jeweils eine unterschiedliche Anzahl von Zähnen aufweisen. Die Teilung des Sägeblattes, also der Abstand der Zähne untereinander, kann konstant oder variabel gewählt werden. Weiterhin besteht die Möglichkeit, Gruppen von Zähnen ineinandergeschachtelt anzuordnen.

Es ist möglich, die Zähne 2 auf dem Zahnrücken 21 mit einem Spanteiler zu versehen, der den Span nochmals aufteilt beziehungsweise ihn schmälert. Weiterhin kann auf der Zahnbrust 22 ein Dachzahn angebracht sein, der durch Anschleifen der Zahnbrust 22 unter einem Winkel gebildet ist. Durch den Dachzahn kann die Stoßbelastung des Zahns auf das zu zerspanende Material weiter reduziert werden. Es trifft dann nur die Spitze auf das zu zerspanende Material, wodurch der Span über die Zahnspitze rollt. Auch das Vorsehen einer Spanleitstufe, die durch einen an dem dem Grundkörper 1 des Sägeblattes abgewandten Ende der Zahnbrust 22 gebildet ist, ist möglich. Die Spanleitstufe führt den Span in einen kleinen Radius und somit von der Oberfläche des Spanraumes ab. Der Span hat dann während der Abkühlphase keinen Kontakt zum Sägeblatt, wodurch ein "Verschweißen" beziehungsweise "Kleben" des Spans am Sägeblatt verhindert ist.

## Patentansprüche

1. Sägeblatt mit einem Grundkörper (1), auf dem ungeschränkte Zähne (2) mit Schneiden angeordnet sind, die in sich wiederholenden Gruppen zu mindestens vier Zähnen zusammengefasst und symmetrisch zur Längsmittelebene des Grundkörpers (1) ausgebildet sind, wobei die Zähne einer Gruppe unterschiedliche Breiten und/oder Höhen aufweisen und die Breiten- und/oder Höhenänderung innerhalb einer Gruppe von Zähnen nicht linear erfolgt, **dadurch gekennzeichnet, dass** der erste Zahn einer Gruppe die geringste Höhe und gleichzeitig die größte Breite der Gruppe aufweist.

2. Sägeblatt nach Anspruch 1, **dadurch gekennzeichnet, dass** die Abstände zwischen den aufeinanderfolgenden Zähnen (2) variabel sind.

3. Sägeblatt nach Anspruch 1, **dadurch gekennzeichnet, dass** die Zahngruppen jeweils eine unterschiedliche Anzahl an Zähnen (2) aufweisen.

4. Sägeblatt nach einem der Ansprüche 1 bis 3, **dadurch gekennzeichnet, dass** mindestens zwei Gruppen von Zähnen (2) ineinander geschachtelt angeordnet sind.

## Claims

1. Saw blade consisting of a main body (1) on which unset teeth (2) with cutting edges are located which are arranged in a series of groups of at least four teeth symmetrically to the longitudinal central plane of the main body (1), where the teeth of one group have different widths and/or heights and the difference in width and/or height within one group of teeth is not linear, **characterised in that** the first tooth of a group is the tooth which is lowest in height and greatest in width **in that** group.

2. Saw blade according to claim 1, **characterised in that** the distance between the consecutive teeth (2) is variable.

3. Saw blade according to claim 1, **characterised in that** the groups of teeth have different numbers of teeth (2).

4. Saw blade according to one of the claims 1 to 3, **characterised in that** at least two groups of teeth (2) are fitted within one another.

## Revendications

1. Lame de scie présentant un corps de base (1) sur lequel sont disposées des dents non avoyées (2) à tranchants, dents qui sont réunies en groupes répétitifs d'au minimum quatre dents et configurées symétriques par rapport au plan longitudinal médian du corps de base (1), sachant que les dents d'un groupe présentent des largeurs et/ou hauteurs différentes, et que la variation de largeur et/ou de hauteur à l'intérieur d'un groupe de dents n'est pas linéaire, **caractérisée en ce que** la première dent d'un groupe présente la plus faible hauteur et en même temps la plus grande largeur du groupe.

2. Lame de scie selon la revendication 1, **caractérisée en ce que** les écarts entre dents successives (2) sont variables.

3. Lame de scie selon la revendication 1, **caractérisé en ce que** les groupes de dents présentent chacun un nombre différent de dents (2).

4. Lame de scie selon l'une des revendications 1 à 3, **caractérisée en ce qu'**au moins deux groupes de dents (2) sont configurées emboîtés les uns dans les autres.
